# EUROPÄISCHE PATENTSCHRIFT

(11) **EP 0 444 555 B1**
(45) Veröffentlichungstag und Bekanntmachung des Hinweises auf die Patenterteilung: **20.11.1996**
(21) Anmeldenummer: 91102699.5
(22) Anmeldetag: 23.02.1991
(51) Int. Cl.: C08J 5/24, C04B 35/80, C04B 35/58, B32B 27/04, B29C 70/00

(54) **Faserverstärkte Verbundwerkstoffe und Verfahren zu ihrer Herstellung**
Fibre reinforced composites and process for preparing them
Composés renforcés par des fibres et procédé pour leur préparation

(30) Priorität: 01.03.1990 DE 4006371
(43) Veröffentlichungstag der Anmeldung: 04.09.1991
(73) Patentinhaber: HOECHST AKTIENGESELLSCHAFT, 65926 Frankfurt am Main (DE)
(72) Erfinder: Brück, Martin, W-6238 Hofheim am Taunus (DE); Vaahs, Tilo, Dr., W-6233 Kelkheim/Taunus (DE); Kleiner, Hans-Jerg, Dr., W-6242 Kronberg (DE); Peuckert, Marcellus, Dr., W-6238 Hofheim am Taunus (DE)

(56) Entgegenhaltungen:
- EP-A- 0 331 424
- EP-A- 0 372 381
- US-A- 4 460 638

## Beschreibung

Die vorliegende Erfindung betrifft faserverstärkte Verbundwerkstoffe und ein Verfahren zu ihrer Herstellung.

Faserverstärkte Verbundwerkstoffe gewinnen wegen ihrer hohen Bruchfestigkeit, Formstabilität, Temperatur- und Korrosionsbeständigkeit eine laufend steigende Bedeutung. Die guten Eigenschaften der faserverstärkten Verbundwerkstoffe basieren auf der Kombination einer Matrix mit eingebauten Fäden.

In der EP-A-0 125 772 wird eine Faserverbundkeramik beschrieben, bei der Fasern zunächst mit Polysilazan imprägniert werden und anschließend das Polysilazan thermisch zu Siliziumnitrid zersetzt wird. Nachteilig bei diesem Verfahren ist, daß das Polysilazan bei der Imprägnierung der Fasern in einem Lösungsmittel gelöst werden muß.
Nach der Imprägnierung muß das Lösungsmittel entfernt werden. Durch die Entfernung des Lösungsmittels aus dem Faserverbund entstehen Hohlräume, wodurch eine in ihren Eigenschaften nicht immer befriedigende Faserverbundkeramik resultiert. Es hat sich gezeigt, daß Faserverbundkeramiken eine steigende Bruchfestigkeit und Formbeständigkeit dann haben, wenn nur wenige Hohlräume in der Faserverbundkeramik vorhanden sind.

Es bestand daher die Aufgabe, ein Verfahren zur Herstellung von faserverstärkten Verbundwerkstoffen anzugeben, mit welchem eine Faserverbundkeramik mit einer gesteigerten Bruchfestigkeit und Formstabilität erhalten wird, die im Rohzustand formstabil und leicht bearbeitbar ist und die während des Erhitzens formstabil bleibt.

Ein Gegenstand der vorliegenden Erfindung ist ein Verfahren zur Herstellung von faserverstärkten Verbundwerkstoffen, das dadurch gekennzeichnet ist, daß man in einem ersten Schritt Fasern mit einem schmelzflüssigen Polysilazan imprägniert, in einem zweiten Schritt das Polysilazan in den Fasern mittels NH₃, Urotropin oder einem Amin in den unschmelzbaren Zustand überführt und in einem dritten Schritt die imprägnierten Fasern auf 800 bis 2000 °C in Stickstoff-, Edelgas- oder Ammoniak-Atmosphäre erhitzt, wobei die Polysilazane dadurch erhältlich sind, daß man Oligosilazane der Formel (I) 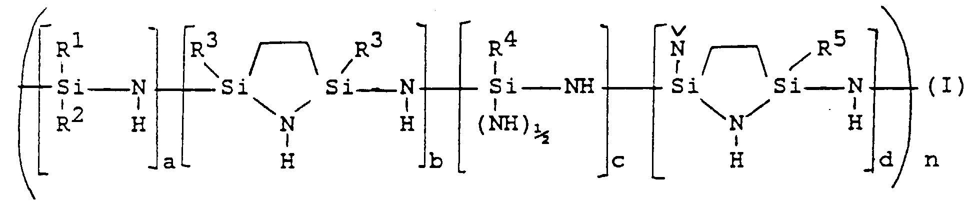
worin 0≤a,b≤1, a+b≥0,3 , 0≤c,d<0,7 und n etwa 2 bis etwa 12 ist, mit mindestens einem der Chlorsilane Cl₂R₆Si-CH₂CH₂-SiR⁶Cl₂, Cl₃Si-CH₂CH₂-SiR⁷Cl₂, R⁸SiCl₃ oder R⁹SiHCl₂ bei 30 °C bis 300 °C umsetzt, wobei unabhängig voneinander
R¹, R², R⁴ = H, C₁-C₆-Alkyl oder C₂-C₆-Alkenyl und R³, R⁵, R⁶, R⁷, R⁸, R⁹ = C₁-C₆-Alkyl oder C₂-C₆-Alkenyl ist und wobei die Umsetzung von (R¹SiHNH)ₙ, d.h. Formel (I) mit a=1, b=c=d=0 und R² = H, mit R⁸SiCl₃ oder R⁹SiHCl₂ ausgeschlossen sein soll.

Dabei sollen unter "Fasern" sowohl eindimensionale Gebilde als auch aus diesen zusammengesetzte zweidimensionale und dreidimensionale Gebilde aller Art verstanden werden.

Vorzugsweise ist unabhängig voneinander R¹, R², R⁴ = H, C₁-C₃-Alkyl oder C₂-C₃-Alkenyl und R³, R⁵, R⁶, R⁷, R⁸, R⁹ = C₁-C₃-Alkyl oder C₂-C₃-Alkenyl. Besonders bevorzugt ist der Fall, daß R¹ = H, R² = R³ = R⁵ = R⁶ = R⁷ = R⁹ = CH₃ und unabhängig voneinander R⁴, R⁸ = CH₃ oder Vinyl ist. a, b, c, d sind die Molfraktionen der jeweiligen Struktureinheiten, wobei a + b + c + d = 1 gilt. Dabei ist 0≤a≤1 und 0≤b≤1, jedoch mit der Zusatzbedingung, daß die Summe a+b ≥ 0,3 ist, woraus folgt, daß mindestens einer der Indizes a, b von Null verschieden sein muß. Weiter gilt 0≤c<0,7 und 0≤d<0,7; diese beiden Indizes können gleichzeitig Null sein. Die Umsetzung von (R¹SiHNH)ₙ, d.h. Formel (I) mit a=1, b=c=d=0 und R²=H, mit R⁸SiCl₃ oder R⁹SiHCl₂ und der Einsatz des dabei entstehenden Polysilazans zur Herstellung von faserverstärkten Verbundwerkstoffen wird bereits in der EP-A-0 372 381 beschrieben. Der genannte Einsatz ist daher nicht Gegenstand der vorliegenden Erfindung.

Die Herstellung der beim erfindungsgemäßen Verfahren eingesetzten Polysilazane wird im wesentlichen schon in der deutschen Patentanmeldung P 38 40 779.5 beschrieben; sie werden dort als "polysubstituierte chlorhaltige Silazanpolymere" bezeichnet. Diese Herstellung verläuft wie folgt:

Zunächst müssen die als Ausgangsprodukte für die Polysilazane eingesetzten Oligosilazane hergestellt werden. Diese können dadurch erhalten werden, daß man überschüssigen Ammoniak mit einem Ausgangsmaterial, das mindestens eine der beiden Komponenten (II) R¹R²SiCl₂ und (III) Cl₂R³Si-CH₂CH₂-SiR³Cl₂ enthält und zusätzlich eine oder beide der Komponenten (IV) R⁴SiCl₃ und (V) Cl₃Si-CH₂CH₂-SiR⁵Cl₂ enthalten kann (je nachdem, ob c>0 und/oder d>0 ist), bei -70 °C bis +100 °C umsetzt. Dabei ist unabhängig voneinander R¹, R², R⁴ = H, C₁-C₆-Alkyl oder C₂-C₆-Alkenyl und R³, R⁵ = C₁-C₆-Alkyl oder C₂-C₆-Alkenyl, und der molare prozentuale Anteil an (II) oder (III) oder deren Gemisch im Ausgangsmaterial beträgt 30 % (c>0 oder d>0 oder beide >0) bis 100 % (c=d=0).

Die als Ausgangsmaterialien für die Oligosilazane eingesetzten Chlorsilane (II) R¹R²SiCl₂ und (IV) R⁴SiCl₃ sind im Handel erhältlich, die ethylenverbrückten Spezies (III) und (V) sind durch Hydrosilylierung von handelsüblichem R³HSiCl₂ und Ethin zugänglich, bzw. durch Hydrosilylierung von Vinyltrichlorsilan und R⁵HSiCl₂.

Zur Herstellung der Oligosilazane werden vorzugsweise die Chlorsilane in einem Lösungsmittel vorgelegt, welches sich inert gegenüber den Reaktanten - Chlorsilane und NH₃ - verhält, und mit Ammoniak bis zur Sättigung vermischt, was dann eintritt, wenn sämtliche SiCl-Funktionen durch NH-Gruppen substituiert sind.

Für diese Reaktion geeignete Lösungsmittel sind z. B. gesättigte aliphatische oder aromatische Kohlenwasserstoffe wie n-Pentan, Cyclohexan, Toluol, chlorierte Kohlenwasserstoffe wie Chloroform oder Chlorbenzol, oder Ether wie Diethylether oder THF.

Gegebenenfalls kann bei der Herstellung der Oligosilazane auch unter vermindertem Druck gearbeitet werden, aber auch bei Drücken von 1 bis 100 bar. Ammoniak kann als Gas oder als Flüssigkeit zudosiert werden. Das Verfahren kann auch kontinuierlich gestaltet werden.

Aus den so erhaltenen Oligosilazanen der Formel (I) können nun durch Umsetzung mit den Chlorsilanen Cl₂R⁶Si-CH₂CH₂-SiR⁶Cl₂, Cl₃Si-CH₂CH₂-SiR⁷Cl₂, R⁸SiCl₃ oder R⁹SiHCl₂ die Polysilazane erhalten werden, die dann schließlich zur erfindungsgemäßen Herstellung von faserverstärkten Verbundwerkstoffen eingesetzt werden.

Vorzugsweise beträgt bei dieser Umsetzung zum Polysilazan das molare Verhältnis der Reaktanten Chlorsilan:Monomereneinheit des Oligosilazans (n = 1) etwa 0,1:1 bis etwa 1,5:1, insbesondere etwa 0,1:1 bis etwa 0,7:1.

Zur Umsetzung dieser Reaktanten miteinander werden vorzugsweise die Oligosilazane vorgelegt und mindestens eins der genannten Chlorsilane zugegeben. Da die Reaktion exotherm ist, wird beim Zusammengeben der Reaktanten vorzugsweise zunächst die Temperatur bei 30 bis 50 °C gehalten. Anschließend erhitzt man auf Temperaturen von 100 bis 300 °C, vorzugsweise auf 120 bis 250 °C.

Nach beendeter Umsetzung werden leichter flüchtige Verbindungen im allgemeinen durch Anlegen von Vakuum aus dem Reaktionsgefäß entfernt.

Das bei der Reaktion ebenfalls entstehende NH₄Cl sublimiert im Verlauf der Reaktion zum größten Teil aus dem Reaktionsgemisch ab. Der eventuell verbliebene Rest des NH₄Cl kann durch Extraktion mit einem inerten organischen Lösungsmittel, wie n-Hexan, Toluol, Ether von dem erfindungsgemäß hergestellten polymeren Chlorsilazan abgetrennt werden.

Die Reaktionsdauer richtet sich nach der Geschwindigkeit des Aufheizens und der Reaktionstemperatur. Im allgemeinen genügt eine Reaktionszeit von 3 bis 7 Stunden.

Es ist auch möglich, die Reaktion in einem organischen Lösungsmittel durchzuführen. Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoffe wie n-Decan, Decalin, Xylol, Toluol, chlorierte Kohlenwasserstoffe wie Chlorbenzol, oder Ether wie Dibenzylether, Diethylenglykoldiethylether. Bei Verwendung eines Lösungsmittels, in dem das gebildete NH₄Cl unlöslich ist, kann letzteres durch Filtration abgetrennt werden. Die erfindungsgemäßen polymeren Chlorsilazane werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1 bis 10 Atmosphären kann gearbeitet werden.

Das Verfahren kann auch kontinuierlich gestaltet werden.

Die beim erfindungsgemäßen Verfahren zusammen mit den Polysilazanen eingesetzten Fasern können etwa aus C, SiC, Si₃N₄, Al₂O₃ oder kohlenstoffaserverstärktem Kohlenstoff bestehen. Man kann z.B. zunächst schmelzflüssiges Polysilazan zu Fasern verspinnen, diese bei 800 bis 1600 °C thermisch in Si₃N₄-Fasern umwandeln, daraus ein zweidimensionales Gebilde herstellen, dieses dann erfindungsgemäß mit dem gleichen oder einem anderen schmelzflüssigen Polysilazan imprägnieren, das Polysilazan in den unschmelzbaren Zustand überführen und auf 800 bis 2000 °C erhitzen.
Falls man das Polysilazan mittels eines Amins unschmelzbar macht, verwendet man im allgemeinen Methylamin oder Ethylamin. Das bevorzugte Mittel zum Umschmelzbarmachen ist jedoch NH₃.

Man kann die erfindungsgemäße Kombination von Schritten auch mehrere Male hintereinander auf dieselben Fasern anwenden.

Weiter kann man Verbindungen des Magnesiums, Aluminiums, Yttriums oder eines seltenen Erdmetalles einzeln oder als Gemisch als Füllstoff für die Fasern in dem geschmolzenen Polysilazan lösen und die Fasern mit dieser Lösung, statt mit reinem Polysilazan imprägnieren; besonders geeignete Verbindungen sind die Nitrate, Alkoholate, Acetate oder Acetylacetonate einzeln oder als Gemisch.

Die imprägnierten Fasern können natürlich auch vor der Erhitzung zu einem Formkörper geformt werden.

Ein weiterer Gegenstand der Erfindung ist ein faserverstärkter Verbundwerkstoff, erhältlich durch das soeben beschriebene Verfahren.

Ein weiterer Gegenstand der vorliegenden Erfindung ist ein faserverstärkter Verbundwerkstoff, bestehend aus Fasern und einer keramischen, amorphen oder teilkristallinen Matrix, wobei die Matrix 35-60 Gew.-% Si, 20-40 Gew.-% N, 0-30 Gew.-% C, 0-25 Gew.-% Cl und 0-20 Gew.-% O enthält, erhältlich durch das genannte Verfahren, vor allem in seinen bevorzugten Ausführungsformen.

Zur Erhöhung der Korrosionsfestigkeit kann es vorteilhaft sein, wenn man den fertigen und bereits mechanisch bearbeiteten faserverstärkten Verbundwerkstoff einer weiteren Behandlung mit schmelzflüssigem Polysilazan unterwirft, nämlich sie damit beschichtet, die Schicht unschmelzbar macht und anschließend auf 800 bis 2000 °C in Stickstoff-, Edelgas- oder Ammoniak-Atmosphäre erhitzt.

Überraschenderweise hat sich gezeigt, daß bei der erfindungsgemäßen Herstellung des faserverstärkten Verbundwerkstoffes oft schon eine einmalige Imprägnierung mit schmelzflüssigem Polysilazan, gefolgt von Umschmelzbarmachen und Erhitzen (Dreischritt-Sequenz) eine völlig ausreichende Bruchfestigkeit des Faserverbundwerkstoffs ergibt. Durch mehrmalige, nacheinander durchgeführte Dreischritt-Sequenzen kann jedoch manchmal eine weitere Steigerung der Bruchfestigkeit und der Korrosionsbeständigkeit des faserverstärkten Verbundwerkstoffs erreicht werden.

Das erfindungsgemäße Verfahren ist auf eindimensionale Gebilde und aus diesen aufgebaute zweidimensionale oder dreidimensionale Gebilde, also Materialien wie Gewebe, Gewebekörper, Vliese, Filamente, Faden, Fasern, Stränge oder Netzwerke gleichermaßen anwendbar. Der Begriff "Fasern" soll, wie gesagt, stellvertretend für alle diese Gebilde benutzt werden. Die Fasern können in schmelzflüssiges Polysilazan getaucht werden, oder das schmelzflüssige Polysilazan wird auf die Fasern aufgetropft oder gegossen. Es kann vorteilhaft sein, dickere Formkörper aus einzelnen, imprägnierten, relativ dünnen Materialflächen durch Übereinanderschichtung zu bilden und diese nach der Überführung des Polysilazans in den unschmelzbaren Zustand weiter zu bearbeiten; in anderen Fällen kann es besser sein, die zunächst nicht imprägnierten Materialflächen übereinander zu schichten und dieses Haufwerk insgesamt mit Polysilazan zu imprägnieren.

Führt man die (dem Unschmelzbarmachen des Polysilazans folgende) Erhitzung der imprägnierten Fasern in Stickstoff- oder Edelgas-Atmosphäre bei 800 bis 1200 °C durch, so erhält man eine amorphe Matrix, die aus etwa 35 bis 60 Gew.-% Si, 20 bis 35 Gew.-% N, 15 bis 30 Gew.-% C, Rest O und Cl besteht.
Führt man die Erhitzung der imprägnierten Fasern dagegen in Ammoniak-Atmosphäre oder Ammoniak enthaltender Inertgas-Atmosphäre bei 800 bis 1200 °C durch, so erhält man eine amorphe Matrix, die aus etwa 50 bis 60 Gew.-% Si, 30 bis 40 Gew.-% N, weniger als 5 Gew.-% O, weniger als 1 Gew.-% C und weniger als 1 Gew.-% Cl besteht.

Bei der Erhitzung in N₂, Edelgas oder NH₃ auf Temperaturen von 1200 °C bis etwa 1600 °C, insbesondere von 1400 °C bis etwa 1600 °C erhält man eine Matrix, die teilkristallin ist und überwiegend aus α-Si₃N₄ besteht.

Bei der Erhitzung auf Temperaturen von etwa 1600 bis 2000 °C erhält man eine Matrix, die weitgehend aus β-Si₃N₄ besteht. Oberhalb von etwa 1800 °C muß dann unter erhöhtem Stickstoffdruck von etwa 10 bis 50 bar erhitzt werden, um eine Zersetzung des Si₃N₄ zu verhindern.

Ein weiterer Gegenstand der vorliegenden Erfindung ist ein Verfahren zur Beschichtung von mechanisch bearbeiteten faserverstärkten Verbundwerkstoffen, dadurch gekennzeichnet, daß man in einem ersten Schritt den mechanisch bearbeiteten faserverstärkten Verbundwerkstoff mit schmelzflüssigem Polysilazan umhüllt, in einem zweiten Schritt das Polysilazan mittels NH₃, Urotropin oder einem Amin in den unscbmelzbaren Zustand überführt und den umhüllten faserverstärkten Verbundwerkstoff in einem dritten Schritt in N₂-, Edelgas- oder NH₃-Atmosphäre auf 800 bis 2000 °C erhitzt, wobei die Polysilazane dadurch erhältlich sind, daß man Oligosilazane der Formel (I) 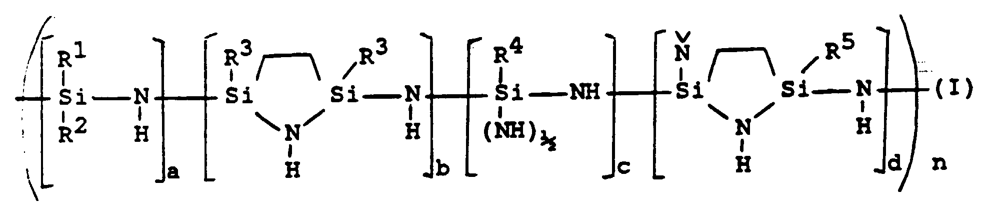
worin 0≤a,b≤1, a+b≥0,3 , 0≤c,d<0,7 und n etwa 2 bis etwa 12 ist, mit mindestens einem der Chlorsilane Cl₂R⁶Si-CH₂CH₂-SiR⁶Cl₂, Cl₃Si-CH₂CH₂-SiR⁷Cl₂, R⁸SiCl₃ oder R⁹SiHCl₂ bis 30 °C bis 300 °C umsetzt, wobei unabhängig voneinander
R¹, R², R⁴ = H, C₁-C₆-Alkyl oder C₂-C₆-Alkenyl und
R³, R⁵, R⁶, R⁷, R⁸, R⁹ = C₁-C₆-Alkyl oder C₂-C₆-Alkenyl ist und wobei die Umsetzung von (R¹SiHNH)ₙ, d.h. Formel (I) mit a=1, b=c=d=0 und R² = H, mit R⁸SiCl₃ oder R⁹SiHCl₂ ausgeschlossen sein soll.

Durch dieses Verfahren ist es möglich, oxidationsunbeständige Materialien, wie beispielsweise Kohlenstoffasern, mit einer Siliciumnitrid enthaltenden Schicht zu umhüllen und so vor einer Oxidation bei hoher Temperatur oder Korrosion zu schützen.
Zum Umschmelzbarmachen des Polysilazans in den oben beschriebenen Verfahren verwendet man vorzugsweise NH₃.

In den folgenden Beispielen wurde die Biegefestigkeit der faserverstärkten Verbundwerkstoffe auf der Universalprüfmaschine Instron 1326 als 4-Punkt-Biegebruchfestigkeit nach der USA Norm Mil.-STD 1942 gemessen:
4-Punkt-Auflager mit 40 mm/20 mm Stützabstand und konstanter Krafterhöhung von 500 N/s an Probekörpern mit den Maßen 3,5 mm · 4,5 mm · 45 mm.

Die dem Versuchsbericht folgenden Beispiele erläutern die Erfindung. Die Prozentzahlen sind Gewichtsprozente, falls nicht anders vermerkt.

### Versuchsbericht

Im folgenden wird zunächst eine allgemeine Verfahrensbeschreibung gegeben, nach der zuerst Oligosilazane der Formel (I) und aus ihnen Polysilazane hergestellt werden können. Genauere Angaben zu den konkret eingesetzten Reaktanten finden sich in den Abschnitten "Polysilazan 1" bis "Polysilazan 6" des Versuchsberichts. Anschließend an den Versuchsbericht werden die Beispiele aufgeführt, die die erfindungsgemäße Herstellung faserverstärkter Verbundwerkstoffe erläutern.
a) Herstellung der Oligosilazane
   In einem 2-l-Vierhalskolben mit Rührvorrichtung, Kühlung und Gaseinleitungsmöglichkeit wurden das gewählte Chlorsilan in 1,5 l absolutem THF gelöst. Anschließend leitete man bei Temperaturen zwischen 0 °C und 10 °C Ammoniak bis zur Sättigung ein. Nach beendeter Reaktion ließ man auftauen und trennte das gebildete Ammoniumchlorid ab.
   Das Filtrat wurde bei Unterdruck bis ca. 10 mbar und ca. 40 °C von THF und den anderen flüchtigen Bestandteilen befreit. Zurück blieb das lösungsmittelfreie Oligosilazan als klares, leichtbewegliches Öl.
b) Herstellung der Polysilazane
   Das erhaltene Oligosilazan wurde in 150 ml Toluol gelöst und vorsichtig mit dem oder den gewählten Chlorsilanen versetzt. Dabei stieg die Innentemperatur auf 50 °C an. Anschließend wurde 2 Stunden zum Rückfluß erhitzt, wobei sich ein farbloser Niederschlag bildete. Danach wurde das Lösungsmittel bei Unterdruck in eine -78 °C kalte Kühlfalle destilliert, wobei die Temperatur des Ölbades alle 15 Minuten um 10 °C erhöht und der Druck im Kolbeninneren etwas erniedrigt wurde, so daß bei 220 °C schließlich 0,1 mbar erreicht waren.
   Dabei sublimierte ein Teil der Reaktionsmischung an die kälteren Teile des Gefäßes, und es blieb eine klare Schmelze zurück. Beim Abkühlen wurde diese zäher und schließlich fest; bei 20 °C war die resultierende Substanz glasartig spröde und klar durchscheinend.

### Polysilazan 1:

Oligosilazan der Formel (I) mit a = 0,82, c = 0,18, b = d = 0 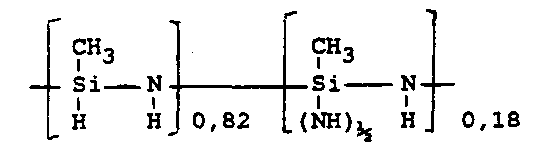 wurde hergestellt aus Ammoniak und
200 ml (223,0 g; 1,94 mol) CH₃SiHCl₂, sowie
50 ml (63,6 g; 0,43 mol) CH₃SiCl₃.

Zur Bildung des Polysilazans wurde das Oligosilazan mit 200 ml (223 g; 1,94 mol) CH₃SiHCl₂ umgesetzt.

### Polysilazan 2:

Oligosilazan der Formel (I) mit a = 0,5, b = 0,4, d = 0,1, c = 0 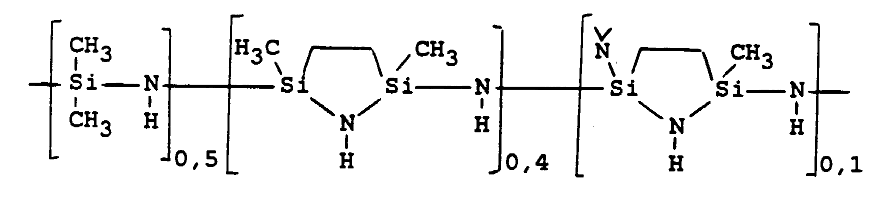 wurde hergestellt aus Ammoniak und
150 ml (159,6 g; 1,24 mol) (CH₃)₂SiCl₂,
200 ml (245,4 g; 0,96 mol) Cl₂CH₃Si-CH₂CH₂-SiCH₃Cl₂, sowie
50 ml (67,3 g; 0,24 mol) Cl₃Si-CH₂CH₂-SiCH₃Cl₂.

Zur Bildung des Polysilazans wurde das Oligosilazan mit 250 ml (63,6 g; 0,43 mol) CH₃SiCl₃ umgesetzt.

### Polysilazan 3:

Oligosilazan der Formel (I) mit b = 0,79, c = 0,21, a = d = 0 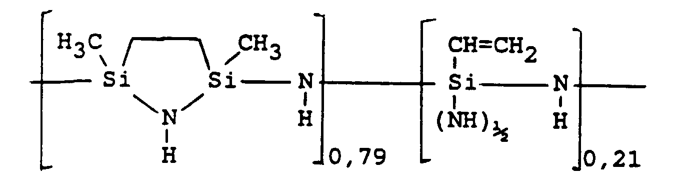 wurde hergestellt aus Ammoniak und
300 ml (368,1 g; 1,44 mol) Cl₂CH₃Si-CH₂CH₂-SiCH₃Cl₂
50 ml (63,5 g; 0,39 mol) H₂C=CH-SiCl₃.

Zur Bildung des Polysilazans wurde das Oligosilazan mit 250 ml (63,3 g; 0,4 mol) CH₃SiCl₃ umgesetzt.

### Polysilazan 4:

Oligosilazan der Formel (I) mit a = 0,73, b = 0,27, c = d = 0 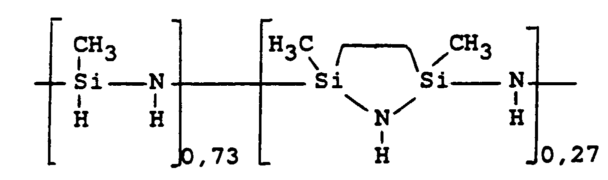 wurde hergestellt aus Ammoniak und
200 ml (223 g; 1,94 mol) CH₃SiHCl₂
150 ml (184 g; 0,72 mol) Cl₂CH₃Si-CH₂CH₂-SiCH₃Cl₂.

Zur Bildung des Polysilazans wurde das Oligosilazan mit 300 ml (334,5 g; 2,9 mol) CH₃SiHCl₂ umgesetzt.

### Polysilazan 5:

Oligosilazan der Formel (I) mit b = 1, a = c = d = 0 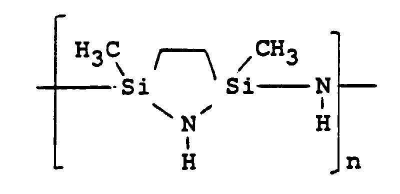 wurde hergestellt aus Ammoniak und
200 ml (254 g; 0,96 mol) Cl₂CH₃Si-CH₂CH₂-SiCH₃Cl₂.

Zur Bildung des Polysilazans wurde das Oligosilazan mit 21,1 ml (26,9 g; 0,18 mol) CH₃SiCl₃.

### Polysilazan 6:

Oligosilazan der Formel (I) mit a = 0,73, b = 0,27, c = d = 0 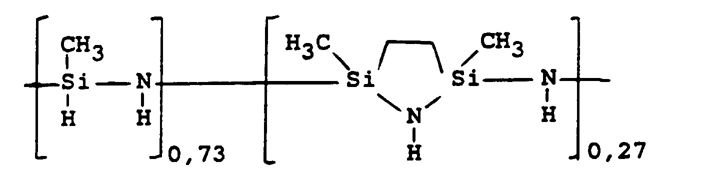 wurde hergestellt aus Ammoniak und
200 ml (223 g; 1,94 mol) CH₃SiHCl₂
150 ml (184 g; 0,72 mol) Cl₂CH₃Si-CH₂CH₂-SiCH₃Cl₂.

Zur Bildung des Polysilazans wurde das Oligosilazan mit einem Gemisch aus 100 ml (111,5 g; 0,97 mol) CH₃SiHCl₂ und 50 ml (63,5 g; 0,39 mol) CH₂=CH-SiCl₃ umgesetzt.

### Beispiel 1

Polysilazan 1 und Kohlenstoffasern (®Sigrafil C der Fa. Sigri GmbH, Meitingen, BRD; mit 40000 Einzelfäden von je 7 µm Durchmesser) wurden in ein Gefäß gegeben. Das Gefäß wurde unter Stickstoffatmosphäre gebracht und auf 150 °C erwärmt. Die Kohlenstoffasern wurden vorher in einem Aceton-Bad von ihrer Schlichte befreit.
Die imprägnierten Kohlenstoffasern wurden aus der Polysilazan-Schmelze entnommen und auf 25 °C abgekühlt. 20 in dieser Art imprägnierte Kohlenstoffasern wurden im rechten Winkel zueinander zu einem Block aufgeschichtet und in einer Presse bei einer Temperatur von 120 °C unter einem Druck von 50 bar verpreßt. Der so erhaltene Formkörper wurde zum Unschmelzbarmachen des Polysilazans 10 Stunden lang in einer NH₃-Atmosphäre von Raumtemperatur auf 250 °C erhitzt und 5 Stunden bei dieser Temperatur gehalten. Anschließend wurde der Formkörper während einer Aufheizzeit von 20 Stunden auf eine Temperatur von 1000 °C in Stickstoff-Atmosphäre erhitzt, 1 Stunde lang bei dieser Temperatur belassen und anschließend abgekühlt. Die gemessene Bruchfestigkeit des erhaltenen faserverstärkten Verbundwerkstoffes ist in der den Beispielen folgenden Tabelle notiert.

### Beispiel 2

Es wurde ein faserverstärktes Verbundmaterial wie in Beispiel 1 hergestellt. Dieses wurde sodann mit demselben Polysilazan wie im Beispiel 1 zwei weiteren Dreischritt-Sequenzen (Imprägnieren, Unschmelzbarmachen, Erhitzen) unterzogen. Die gemessene Biegebruchfestigkeit des erhaltenen faserverstärkten Verbundmaterials ist wieder in der Tabelle notiert.

### Beispiel 3

Polysilazan 2 und Al₂O₃-SiO₂-Fasern (85 % Al₂O₃, 15 % SiO₂) mit 1000 Einzelfäden von je 0,017 mm Durchmesser wurden in einem Gefäß unter Stickstoff-Atmosphäre auf 180 °C erwärmt, dann wurden die Fasern aus der Schmelze entnommen und auf 25 °C abgekühlt. Die imprägnierten Fasern wurden kreuzweise geschichtet und in einer Presse bei 110 °C unter 40 bar Druck zu einem Formkörper verpreßt. In einem Druckgefäß wurde das imprägnierte Material 2 Stunden lang bei Raumtemperatur unter Ammoniak-Atmosphäre gehalten und dann innerhalb von 15 Stunden auf eine Temperatur von 1400 °C unter einem Ammoniakdruck von 10 bar erhitzt, 10 Stunden lang auf dieser Temperatur belassen und anschließend abgekühlt. Die Matrix bestand zu 44 Gew.-% aus α-Si₃N₄. Die gemessene Biegebruchfestigkeit des erhaltenen faserverstärkten Verbundwerkstoffs ist wieder in der Tabelle notiert.

### Beispiel 4

SiC-Fasern mit 500 Einzelfäden von je 0,015 mm Durchmesser wurden unter Stickstoff als Schutzgas durch ein Bad aus geschmolzenem Polysilazan 3 mit einem Zusatz von 5 Gew.-% Yttriumacetat gezogen. Die so imprägnierten SiC-Fasern wurden kreuzweise übereinandergeschichtet, bei einer Temperatur von 100 °C in einer Presse unter 40 bar Druck verpreßt und 10 Stunden bei 150 °C in Ammoniak-Atmosphäre gehalten. Unter einem Stickstoffdruck von 5 bar wurde das Formteil innerhalb von 15 Stunden auf 1700 °C erhitzt, 10 Stunden lang auf dieser Temperatur belassen und anschließend abgekühlt.
Die Matrix bestand zu 68 Gew.-% aus β-Si₃N₄. Die gemessene Biegebruchfestigkeit des erhaltenen faserverstärkten Verbundwerkstoffs ist wieder in der Tabelle notiert.

### Beispiel 5

Polysilazan 4 wurde unter N₂-Schutzgas in eine Schmelzspinnapparatur gegeben, auf 160 °C erhitzt und die Schmelze mittels eines Kolbens durch eine Spinndüse von 0,1 mm Durchmesser gedrückt. Durch eine hohe Abzugsgeschwindigkeit und eine Faserfallstrecke von 1,50 m wurde die Spinnfaser zu einer Faserstärke von 20 µm gestreckt. Die resultierenden Fasern wurden in NH₃-Atmosphäre unschmelzbar gemacht und anschließend in einem Ofen unter NH₃-Atmosphäre pyrolysiert. Dazu wurde die Temperatur während 10 Stunden von 25 °C auf 1200 °C erhöht, 1 Stunde bei 1200 °C gehalten und dann während 4 Stunden wieder auf Raumtemperatur gesenkt. Die resultierende Faser war röntgenamorph und enthielt neben Si und N als Hauptbestandteile noch 0,1 Gew.-% C, 0,6 Gew.-% Cl und 2,0 Gew.-% 0. Die keramische Ausbeute der Pyrolyse betrug 67 Gew.-%. Die Zugfestigkeit der Faser betrug 2 GPa.

Die so hergestellten Fasern wurden in Strängen aus je 500 Einzelfäden durch ein Bad aus geschmolzenem Polysilazan 5 unter Stickstoff-Schutzgas gezogen. Die so imprägnierten Fasern wurden kreuzweise übereinandergeschichtet und bei 100 °C unter einem Druck von 40 bar zu einem Formkörper verpreßt. Der Formkörper wurde innerhalb von 5 Stunden von Raumtemperatur auf 150 °C in NH₃-Atmosphäre erhitzt. Unter Stickstoffdruck von 1 bar wurde das Formteil innerhalb von 20 h auf 1200 °C erhitzt, 10 h lang bei dieser Temperatur belassen und anschließend abgekühlt. Die gemessene Biegebruchfestigkeit ist in der Tabelle notiert.

### Beispiel 6

A) Polysilazan 4 wurde genauso zur Faser versponnen wie in Beispiel 5 beschrieben. Die so hergestellte Polysilazanfaser wurde anschließend in reiner Ammoniakatmosphäre von Raumtemperatur bis auf 500 °C mit einer Aufheizrate von 0,5 K/min erwärmt und danach innerhalb von 6 Stunden unter Erhitzung von 500 °C auf 1300 °C in Stickstoffatmosphäre pyrolysiert. Die Temperatur von 1300 °C wurde 1 Stunde gehalten, und anschließend wurde mit einer Geschwindigkeit von 4 K/min auf Raumtemperatur abgekühlt. Die Elementzusammensetzung der resultierenden Faser war 54,1 Gew.-% Si, 35,3 Gew.-% N, 5,8 Gew.-% C, 1,5 Gew.-% Cl, 2,9 Gew.-% O und 0,4 Gew.-% H.
   Die Zugfestigkeit der röntgenamorphen Fasern betrug im Durchschnitt 2,4 GPa.
B) Die so gewonnenen Fasern wurden zu Multifilamenten aus je 500 Einzelfasern zusammengefaßt und unter Stickstoff durch eine Schmelze aus Polysilazan 6 gezogen.
   Die imprägnierten Faserbündel wurden dann in einem Winkel von 90 °C zueinander aufgeschichtet. Der resultierende Körper wurde unter einem Druck von 45 bar in N₂-Atmosphäre verpreßt. Nach einer Haltezeit von 2 Stunden bei einer Temperatur von 100 °C wurde der Körper langsam auf Raumtemperatur abgekühlt und entspannt.
   Die anschließende Pyrolyse wurde in NH₃-haltiger Atmosphäre durchgeführt, und zwar mit einer Aufheizrate von 0,5 K/min. Die Endtemperatur betrug 1350 °C, die 1 Stunde gehalten wurde. Die röntgendiffraktometrische Untersuchung (XRD) der so hergestellten Matrix zeigte in geringem Anteil ein mikrokristallines Gefüge aus α-Si₃N₄-Phase, während der überwiegende Anteil der Matrix amorph war.

Die gemessene Biegebruchfestigkeit des erhaltenen Faserverbundwerkstoffs ist wieder in der Tabelle notiert.

### Beispiel 7

Es wurde analog zu Beispiel 6 A) ein Multifilament aus 500 Einzelfasern hergestellt und anschließend dreimal nacheinander der Dreischritt-Sequenz (Imprägnieren, Unschmelzbarmachen, Erhitzen) nach Beispiel 6 B) unterzogen. Das Ergebnis der Biegebruchfestigkeitsmessung ist in der folgenden Tabelle aufgeführt.

**Tabelle**

| Beispiel Nr. | Fasermaterial | Biegebruchfestigkeit MPa |
|---|---|---|
| 1 | C | 220 |
| 2 | C | 295 |
| 3 | Al₂O₃-SiO₂ | 254 |
| 4 | SiC | 351 |
| 5 | Si₃N₄ | 434 |
| 6 | Si₃N₄/SiC | 427 |
| 7 | Si₃N₄/SiC | 512 |

## Patentansprüche (Patentansprüche für folgende(n) Vertragsstaat(en): BE, DE, FR, GB, IT, NL)

1. Verfahren zur Herstellung von faserverstärkten Verbundwerkstoffen, dadurch gekennzeichnet, daß man in einem ersten Schritt Fasern mit einem schmelzflüssigen Polysilazan imprägniert, in einem zweiten Schritt das Polysilazan in den Fasern mittels NH₃, Urotropin oder einem Amin in den unschmelzbaren Zustand überführt und in einem dritten Schritt die imprägnierten Fasern auf 800 bis 2000 °C in Stickstoff-, Edelgas- oder Ammoniak-Atmosphäre erhitzt, wobei die Polysilazane dadurch erhältlich sind, daß man Oligosilazane der Formel (I) 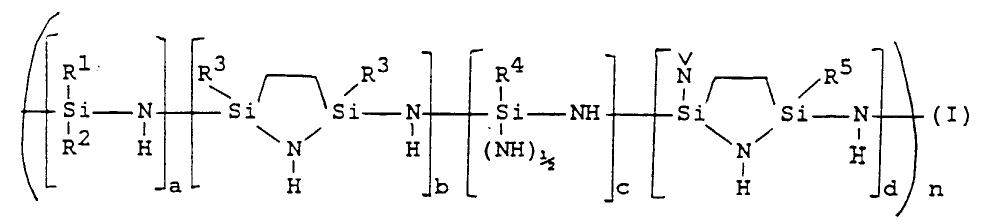
worin 0≤a,b≤1, a+b≥0,3 , 0≤c,d<0,7 und n 2 bis 12 ist, mit mindestens einem der Chlorsilane Cl₂R⁶Si-CH₂CH₂-SiR⁶Cl₂, Cl₃Si-CH₂CH₂-SiR⁷Cl₂, R⁸SiCl₃ oder R⁹SiHCl₂ bei 30 °C bis 300 °C umsetzt, wobei unabhängig voneinander
R¹, R², R⁴ = H, C₁-C₆-Alkyl oder C₂-C₆-Alkenyl und
R³, R⁵, R⁶, R⁷, R⁸, R⁹ = C₁-C₆-Alkyl oder C₂-C₆-Alkenyl ist und wobei die Umsetzung von Oligosilazanen der Formel (R¹SiHNH)ₙ mit R⁸ SiCl₃ oder R⁹SiHCl₂ ausgeschlossen sein soll.

2. Verfahren nach Anspruch 1, dadurch gekennzeichnet, daß unabhängig voneinander R¹, R², R⁴ = H, C₁-C₃-Alkyl oder C₂-C₃-Alkenyl und R³, R⁵, R⁶, R⁷, R⁸, R⁹ = C₁-C₃-Alkyl oder C₂-C₃-Alkenyl ist.

3. Verfahren nach Anspruch 1, dadurch gekennzeichnet, daß R¹ = H, R² = R³ = R⁵ = R⁶ = R⁷ = R⁹ = CH₃ und unabhängig voneinander R⁴, R⁸ = CH₃ oder Vinyl ist.

4. Verfahren nach einem der Ansprüche 1 bis 3, dadurch gekennzeichnet, daß man Fasern aus C, SiC, Si₃N₄ oder Al₂O₃ oder kohlenstoffaserverstärktem Kohlenstoff verwendet.

5. Verfahren nach einem der Ansprüche 1 bis 3, dadurch gekennzeichnet, daß man zunächst schmelzflüssiges Polysilazan zu Fasern verspinnt, diese bei 800 bis 1600 °C thermisch in eine Siliciumnitrid enthaltende Faser umwandelt, daraus ein zwei- oder dreidimensionales Gebilde herstellt, dieses dann mit demselben oder einem anderen schmelzflüssigen Polysilazan imprägniert, das Polysilazan in den unschmelzbaren Zustand überführt und auf 800 bis 2000 °C erhitzt.

6. Verfahren nach einem der Ansprüche 1 bis 5, dadurch gekennzeichnet, daß man die Folge der drei Verfahrensschritte mindestens zweimal nacheinander an denselben Fasern durchführt.

7. Verfahren nach einem der Ansprüche 1 bis 6, dadurch gekennzeichnet, daß man Verbindungen des Magnesiums, Aluminiums, Yttriums oder eines seltenen Erdmetalles einzeln oder im Gemisch als Füllstoff für die Fasern in dem geschmolzenen Polysilazan löst und die Fasern mit dieser Lösung statt mit reinem Polysilazan imprägniert.

8. Verfahren nach Anspruch 7, dadurch gekennzeichnet, daß man als Füllstoff die Nitrate, Alkoholate, Acetate oder Acetylacetonate der genannten Metalle einzeln oder im Gemisch verwendet.

9. Faserverstärkter Verbundwerkstoff, erhältlich nach dem Verfahren gemäß einem der Ansprüche 1 bis 8.

10. FaserverstärkterVerbundwerkstoff, bestehend aus Fasern und einer keramischen, amorphen oder teilkristallinen Matrix, wobei die Matrix 35 bis 60 Gew.-% Si, 20 bis 40 Gew.-% N, 0 bis 25 Gew.-% Cl, 0 bis 35 Gew.-% C und 0 bis 20 Gew.-% O enthält, erhältlich nach dem Verfahren gemäß einem der Ansprüche 1 bis 10.

11. Verfahren zur Beschichtung von faserverstärktem Verbundwerkstoff, dadurch gekennzeichnet, daß man einen faserverstärkten Verbundwerkstoff gemäß Anspruch 9 mechanisch bearbeitet, ihn dann in einem ersten Schritt mit schmelzflüssigem Polysilazan beschichtet, in einem zweiten Schritt das Polysilazan mittels NH₃, Urotropin oder einem Amin in den unschmelzbaren Zustand überführt und den beschichteten faserverstärkten Verbundwerkstoff in einem dritten Schritt in Stickstoff-, Edelgas- oder Ammoniak-Atmosphäre auf 800 bis 2000 °C erhitzt.

12. Beschichteter faserverstärkter Verbundwerkstoff, erhältlich nach dem Verfahren gemäß Anspruch 11.

## Patentansprüche (Patentansprüche für folgende(n) Vertragsstaat(en): ES)

1. Verfahren zur Herstellung von faserverstärkten Verbundwerkstoffen, dadurch gekennzeichnet, daß man in einem ersten Schritt Fasern mit einem schmelzflüssigen Polysilazan imprägniert, in einem zweiten Schritt das Polysilazan in den Fasern mittels-NH₃, Urotropin oder einem Amin in den unschmelzbaren Zustand überführt und in einem dritten Schritt die imprägnierten Fasern auf 800 bis 2000 °C in Stickstoff-, Edelgas- oder Ammoniak-Atmosphäre erhitzt, wobei die Polysilazane dadurch erhältlich sind, daß man Oligosilazane der Formel (I) 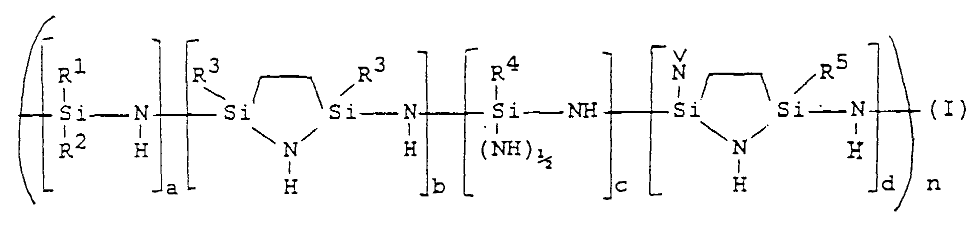
worin 0≤a,b≤1, a+b≥0,3 , 0≤c,d<0,7 und n 2 bis 12 ist, mit mindestens einem der Chlorsilane Cl₂R⁶Si-CH₂CH₂-SiR⁶Cl₂, Cl₃Si-CH₂CH₂-SiR⁷Cl₂, R⁸SiCl₃ ode-r R⁹SiHCl₂ bei 30 °C bis 300 °C umsetzt, wobei unabhängig voneinander
R¹, R², R⁴ = H, C₁-C₆-Alkyl oder C₂-C₆-Alkenyl und
R³, R⁵, R⁶, R⁷, R⁸, R⁹ = C₁-C₆-Alkyl oder C₂-C₆-Alkenyl ist und wobei die Umsetzung von Oligosilazanen der Formel (R¹SiHNH)ₙ mit R⁸SiCl₃ oder R⁹SiHCl₂ ausgeschlossen sein soll.

2. Verfahren nach Anspruch 1, dadurch gekennzeichnet, daß unabhängig voneinander R¹, R², R⁴ = H, C₁-C₃-Alkyl oder C₂-C₃-Alkenyl und R³, R⁵, R⁶, R⁷, R⁸, R⁹ = C₁-C₃-Alkyl oder C₂-C₃-Alkenyl ist.

3. Verfahren nach Anspruch 1, dadurch gekennzeichnet, daß R¹ = H, R² = R³ = R⁵ = R⁶ = R⁷ = R⁹ = CH₃ und unabhängig voneinander R⁴, R⁸ = CH₃ oder Vinyl ist.

4. Verfahren nach einem der Ansprüche 1 bis 3, dadurch gekennzeichnet, daß man Fasern aus C,. SiC, Si₃N₄ oder Al₂O₃ oder kohlenstoffaserverstärktem Kohlenstoff verwendet.

5. Verfahren nach einem der Ansprüche 1 bis 3, dadurch gekennzeichnet, daß man zunächst schmelzflüssiges Polysilazan zu Fasern verspinnt, diese bei 800 bis 1600 °C thermisch in eine Siliciumnitrid enthaltende Faser umwandelt, daraus ein zwei- oder dreidimensionales Gebilde herstellt, dieses dann mit demselben oder einem anderen schmelzflüssigen Polysilazan imprägniert, das Polysilazan in den unschmelzbaren Zustand überführt und auf 800 bis 2000 °C erhitzt.

6. Verfahren nach einem der Ansprüche 1 bis 5, dadurch gekennzeichnet, daß man die Folge der drei Verfahrensschritte mindestens zweimal nacheinander an denselben Fasern durchführt.

7. Verfahren nach einem der Ansprüche 1 bis 6, dadurch gekennzeichnet, daß man Verbindungen des Magnesiums, Aluminiums, Yttriums oder eines seltenen Erdmetalles einzein oder im Gemisch als Füllstoff für die Fasern in dem geschmolzenen Polysilazan löst und die Fasern mit dieser Lösung statt mit reinem Polysilazan imprägniert.

8. Verfahren nach Anspruch 7, dadurch gekennzeichnet, daß man als Füllstoff die Nitrate, Alkoholate, Acetate oder Acetylacetonate der genannten Metalle einzeln oder im Gemisch verwendet.

9. Verfahren zur Beschichtung von faserverstärktem Verbundwerkstoff, dadurch gekennzeichnet, daß man einen nach dem Verfahren von Anspruch 1 erhältlichen faserverstärkten Verbundwerkstoff mechanisch bearbeitet, ihn dann in einem ersten Schritt mit schmelzflüssigem Polysilazan beschichtet,in einem zweiten Schritt das Polysilazan mittels NH₃, Urotropin oder einem Amin in den unschmelzbaren Zustand überführt und den beschichteten faserverstärkten Verbundwerkstoff in einem dritten Schritt in Stickstoff-, Edelgas- oder Ammoniak-Atmosphäre auf 800 bis 2000 °C erhitzt.

## Claims (Claims for the following Contracting State(s): BE, DE, FR, GB, IT, NL)

1. A process for the preparation of a fiber-reinforced composite material, which comprises impregnating fibers with a molten polysilazane in a first step, converting the polysilazane in the fibers into the non-fusible state by means of NH₃, urotropine or an amine in a second step, and heating the impregnated fibers to 800 to 2000°C in a nitrogen, noble gas or ammonia atmosphere in a third step, the polysilazanes being obtainable by reacting oligosilazanes of the formula (I) 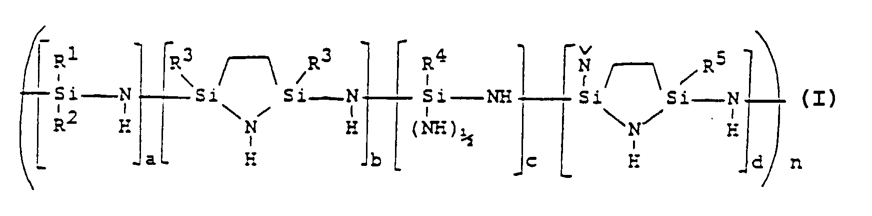
in which 0≤a, b≤1, a+b≥0.3, 0≤c, d<0.7 and n is 2 to 12, with at least one of the chlorosilanes Cl₂R⁶Si-CH₂CH₂-SiR⁶Cl₂, Cl₃Si-CH₂CH₂-SiR⁷Cl₂, R⁸SiCl₃ or R⁹SiHCl₂ at 30°C to 300°C, where, independently of one another,
R¹, R² and R⁴ are H, C₁-C₆-alkyl or C₂-C₆-alkenyl and R³, R⁵, R⁶, R⁷, R⁸ and R⁹ are C₁-C₆-alkyl or C₂-C₆-alkenyl,
and where the reaction of oligosilazanes of the formula (R¹SiHNH)ₙ with R⁸SiCl₃ or R⁹SiHCl₂ is to be excluded.

2. The process as claimed in claim 1, wherein, independently of one another, R¹, R² and R⁴ are H, C₁-C₃-alkyl or C₂-C₃-alkenyl and R³, R⁵, R⁶, R⁷, R⁸ and R⁹ are C₁-C₃-alkyl or C₂-C₃-alkenyl.

3. The process as claimed in claim 1, wherein R¹ = H, R² = R³ = R⁵ = R⁶ = R⁷ = R⁹ = CH₃ and, independently of one another, R⁴ and R⁸ are CH₃ or vinyl.

4. The process as claimed in any one of claims 1 to 3, wherein fibers of C, SiC, Si₃N₄ or Al₂O₃ or carbon fiberreinforced carbon are used.

5. The process as claimed in any one of claims 1 to 3, wherein molten polysilazane is first spun to fibers, these are converted into a fiber containing silicon nitride by means of heat at 800 to 1600°C, a two- or three-dimensional structure is produced from the fiber, this is then impregnated with the same or another molten polysilazane, the polysilazane is converted into the non-fusible state and the structure is heated to 800 to 2000°C.

6. The process as claimed in any one of claims 1 to 5, wherein the sequence of the three process steps is carried out on the same fibers at least twice in succession.

7. The process as claimed in any one of claims 1 to 6, wherein compounds of magnesium, aluminum, yttrium or a rare earth metal, individually or as a mixture, are dissolved in the molten polysilazane as a filler for the fibers and the fibers are impregnated with this solution instead of with pure polysilazane.

8. The process as claimed in claim 7, wherein the nitrates, alcoholates, acetates or acetylacetonates of the metals mentioned, individually or as a mixture, are used as the filler.

9. A fiber-reinforced composite material obtainable by the process as claimed in any one of claims 1 to 8.

10. A fiber-reinforced composite material consisting of fibers and a ceramic, amorphous or partly crystalline matrix, the matrix containing 35 to 60 % by weight of Si, 20 to 40 % by weight of N, 0 to 25 % by weight of Cl, 0 to 35 % by weight of C and 0 to 20 % by weight of 0, obtainable by the process as claimed in any one of claims 1 to 9.

11. A process for coating a fiber-reinforced composite material, which comprises mechanically working a fiber-reinforced composite material as claimed in claim 9, then coating it with molten polysilazane in a first step, converting the polysilazane into the non-fusible state by means of NH₃, urotropine or an amine in a second step, and heating the coated fiber-reinforced composite material to 800 to 2000°C in a nitrogen, noble gas or ammonia atmosphere in a third step.

12. A coated fiber-reinforced composite material obtainable by the process as claimed in claim 11.

## Claims (Claims for the following Contracting State(s): ES)

1. A process for the preparation of a fiber-reinforced composite material, which comprises impregnating fibers with a molten polysilazane in a first step, converting the polysilazane in the fibers into the non-fusible state by means of NH₃, urotropine or an amine in a second step, and heating the impregnated fibers to 800 to 2000°C in a nitrogen, noble gas or ammonia atmosphere in a third step, the polysilazanes being obtainable by reacting oligosilazanes of the formula (I) 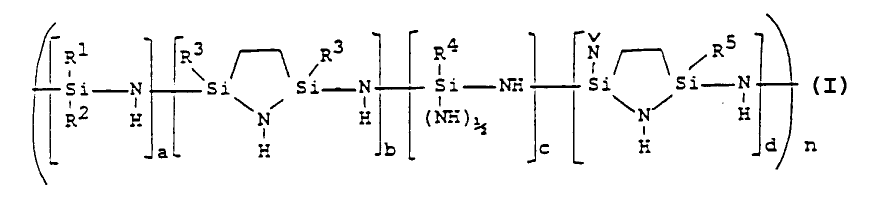
in which 0≤a, b≤1, a+b≥0.3, 0≤c, d<0.7 and n is 2 to 12, with at least one of the chlorosilanes Cl₂R⁶Si-CH₂CH₂-SiR⁶Cl₂, Cl₃Si-CH₂CH₂-SiR⁷Cl₂, R⁸SiCl₃ or R⁹SiHCl₂ at 30°C to 300°C, where, independently of one another,
R¹, R² and R⁴ are H, C₁-C₆-alkyl or C₂-C₆-alkenyl and R³, R⁵, R⁶, R⁷, R⁸ and R⁹ are C₁-C₆-alkyl or C₂-C₆-alkenyl,
and where the reaction of oligosilazanes of the formula (R¹SiHNH)ₙ with R⁸SiCl₃ or R⁹SiHCl₂ is to be excluded.

2. The process as claimed in claim 1, wherein, independently of one another, R¹, R² and R⁴ are H, C₁-C₃-alkyl or C₂-C₃-alkenyl and R³, R⁵, R⁶, R⁷, R⁸ and R⁹ are C₁-C₃-alkyl or C₂-C₃-alkenyl.

3. The process as claimed in claim 1, wherein R¹ = H, R² = R³ = R⁵ = R⁶ = R⁷ = R⁹ = CH₃ and, independently of one another, R⁴ and R⁸ are CH₃ or vinyl.

4. The process as claimed in any one of claims 1 to 3, wherein fibers of C, SiC, Si₃N₄ or Al₂O₃ or carbon fiberreinforced carbon are used.

5. The process as claimed in any one of claims 1 to 3, wherein molten polysilazane is first spun to fibers, these are converted into a fiber containing silicon nitride by means of heat at 800 to 1600°C, a two- or three-dimensional structure is produced from the fiber, this is then impregnated with the same or another molten polysilazane, the polysilazane is converted into the non-fusible state and the structure is heated to 800 to 2000°C.

6. The process as claimed in any one of claims 1 to 5, wherein the sequence of the three process steps is carried out on the same fibers at least twice in succession.

7. The process as claimed in any one of claims 1 to 6, wherein compounds of magnesium, aluminum, yttrium or a rare earth metal, individually or as a mixture, are dissolved in the molten polysilazane as a filler for the fibers and the fibers are impregnated with this solution instead of with pure polysilazane.

8. The process as claimed in claim 7, wherein the nitrates, alcoholates, acetates or acetylacetonates of the metals mentioned, individually or as a mixture, are used as the filler.

9. A process for coating a fiber-reinforced composite material, which comprises mechanically working a fiber-reinforced composite material obtainable by the process of claim 1, then coating it with molten polysilazane in a first step, converting the polysilazane into the non-fusible state by means of NH₃, urotropine or an amine in a second step, and heating the coated fiber-reinforced composite material to 800 to 2000°C in a nitrogen, noble gas or ammonia atmosphere in a third step.

## Revendications (Revendications pour l'(les) Etat(s) contractant(s) suivant(s): BE, DE, FR, GB, IT, NL)

1. Procédé pour la préparation de matériaux composites à renfort en fibres, caractérisé en ce que dans une première étape on imprègne les fibres d'un polysilazane en fusion, dans une deuxième étape, on transforme à l'aide de NH₃, de l'urotropine ou d'une amine en état infusible le polysilazane dans les fibres, et dans une troisième étape, on chauffe les fibres imprégnées à une température de 800 à 2000 °C sous une atmosphère d'azote, de gaz nobles ou d'ammoniac, pouvant obtenir les polysilazanes en faisant réagir des oligosilazanes de formule (I) 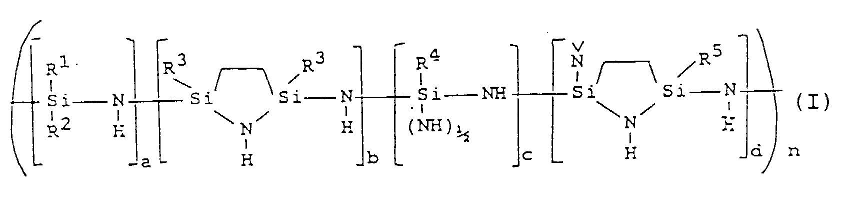 dans laquelle 0≤a, b≤1, a+b≥0,3, 0≤c, d<0,7 et n va de 2 à 12, avec au moins un chlorosilane Cl₂R⁶Si-CH₂CH₂-SiR⁶Cl₂, Cl₃Si-CH₂CH₂-SiR⁷Cl₂, R⁸SiCl₃ ou R⁹SiHCl₂, à une température de 30 à 300 °C, indépendamment les uns des autres R¹, R², R⁴ = H, alkyle en C₁-C₆ ou alcényle en C₂-C₆ et R³, R⁵, R⁶, R⁷, R⁸, R⁹ = alkyle en C₁-C₆ ou alcényle en C₂-C₆ et la réaction des oligoslizanes de formule (R¹SiHNH)ₙ avec R⁸SiCl₃ ou R⁹SiHCl₂ devant être exclue.

2. Procédé selon la revendication 1, caractérisé en ce que, indépendamment les uns des autres, R¹, R², R⁴ = H, alkyle en C₁-C₃ ou alcényle en C₂-C₃ et R³, R⁵, R⁶, R⁷, R⁸, R⁹ = alkyle en C₁-C₃ ou alcényle en C₂-C₃.

3. Procédé selon la revendication 1, caractérisé en ce que R¹ = H, R² = R³ = R⁵ = R⁶ = R⁷ = R⁸ = R⁹ = CH₃ et, indépendamment les uns des autres, R⁴, R⁸ = CH₃ ou vinyle.

4. Procédé selon l'une des revendications 1 à 3, caractérisé en ce que l'on utilise des fibres de C, de SiC, de Si₃N₄ ou d'Al₂O₃ ou de carbone à renfort en fibres de carbone.

5. Procédé selon l'une des revendications 1 à 3, caractérisé en ce que d'abord on file en fibres le polysilazane en fusion, on transforme celles-ci à 800 à 1600 °C sous l'effet de la chaleur en des fibres contenant du nitrure de silicium, à partir de ceux-ci on prépare des objets bi- ou tridimensionnels, on imprègne ces objets du même ou d'un autre polysilazane en fusion, on transforme le polysilazane en état infusible et on chauffe à 800 à 2000 °C.

6. Procédé selon l'une des revendications 1 à 5, caractérisé en ce que l'on met en oeuvre la séquence des trois étapes de procédé au moins à deux reprises successivement sur les mêmes fibres.

7. Procédé selon l'une des revendications 1 à 6, caractérisé en ce que l'on dissout des composés de magnésium, d'aluminium, d'yttrium et de métal de terres rares, seuls ou en mélange, dans le polysilazane fondu en tant que charge pour les fibres et on imprègne les fibres de cette solution au lieu de polysilazane pur.

8. Procédé selon la revendication 7, caractérisé en ce que l'on utilise en tant que charge les nitrates, les alcoolates, les acétates ou les acétylacétonates des métaux précités individuellement ou en mélange.

9. Matériau composite à renfort en fibres que l'on peut obtenir selon le procédé selon l'une des revendications 1 à 8.

10. Matériau composite à renfort en fibres composé de fibres et d'une matrice céramique amorphe ou partiellement cristalline, la matrice contenant de 35 à 60 % en poids de Si, de 20 à 40 % en poids de N, de 0 à 25 % en poids de Cl, de 0 à 35 % en poids de C et de 0 à 20 % en poids de 0, que l'on peut obtenir à l'aide du procédé selon l'une des revendications 1 à 10.

11. Procédé pour le revêtement de matériaux composites à renfort en fibres, caractérisé en ce que l'on traite par voie mécanique un matériau composite à renfort en fibres selon la revendication 9, puis dans une première étape, on le revêt d'un polysilazane en fusion, dans une deuxième étape, on rend infusible les polysilazanes à l'aide de NH₃, de l'urotropine ou d'une amine et dans une troisième étape, on chauffe le matériau composite à renfort en fibres revêtues sous une atmosphère d'azote, de gaz noble ou d'ammoniac à 800 à 2000 °C.

12. Matériau composite à renfort en fibres revêtu que l'on peut obtenir selon le procédé selon la revendication 11.

## Revendications (Revendications pour l'(les) Etat(s) contractant(s) suivant(s): ES)

1. Procédé pour la préparation de matériaux composites à renfort en fibres, caractérisé en ce que dans une première étape on imprègne les fibres d'un polysilazane en fusion, dans une deuxième étape, on transforme à l'aide de NH₃, de l'urotropine ou d'une amine en état infusible le polysilazane dans les fibres et dans une troisième étape, on chauffe les fibres imprégnées à une température de 800 à 2000 °C sous une atmosphère d'azote, de gaz nobles ou d'ammoniac, pouvant obtenir les polysilazanes en faisant réagir des oligosilazanes de formule (I) 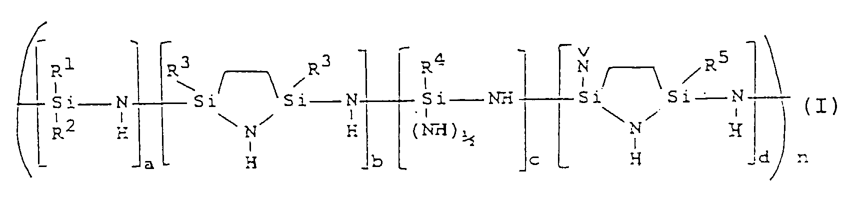 dans laquelle 0≤a, b≤1, a+b≥0,3, 0≤c, d<0,7 et n va de 2 à 12, avec au moins un chlorosilane Cl₂R⁶Si-CH₂CH₂-SiR⁶Cl₂, Cl₃Si-CH₂CH₂-SiR⁷Cl₂, R⁸SiCl₃ ou R⁹SiHCl₂, à une température de 30 à 300 °C, indépendamment les uns des autres R¹, R², R⁴ = H, alkyle en C₁-C₆ ou alcényle en C₂-C₆ et R³, R⁵, R⁶, R⁷, R⁸, R⁹ = alkyle en C₁-C₆ ou alcényle en C₂-C₆ et la réaction des oligosilazanes de formule (R¹SiHNH)ₙ avec R⁸SiCl₃ ou R⁹SiHCl₂ devant être exclue.

2. Procédé selon la revendication 1, caractérisé en ce que, indépendamment les uns des autres, R¹, R², R⁴ = H, alkyle en C₁-C₃ ou alcényle en C₂-C₃ et R³, R⁵, R⁶, R⁷, R⁸, R⁹ = alkyle en C₁-C₃ ou alcényle en C₂-C₃.

3. Procédé selon la revendication 1, caractérisé en ce que, R¹ = H, R² = R³ = R⁵ = R⁶ = R⁷ = R⁸ = R⁹ = CH₃ et, indépendamment les uns des autres, R⁴, R⁸ = CH₃ ou vinyle.

4. Procédé selon l'une des revendications 1 à 3, caractérisé en ce que l'on utilise des fibres de C, de SiC, de Si₃N₄ ou d'Al₂O₃ ou de carbone à renfort en fibres de carbone.

5. Procédé selon l'une des revendications 1 à 3, caractérisé en ce que d'abord on file en fibres le polysilazane en fusion, on transforme celles-ci à 800 à 1600 °C sous l'effet de la chaleur en des fibres contenant du nitrure de silicium, à partir de celles-ci on prépare des objets bi- ou tridimensionnels, on imprègne ces objets du même ou d'un autre polysilazane en fusion, on transforme le polysilazane en état infusible et on chauffe à 800 à 2000 °C.

6. Procédé selon l'une des revendications 1 à 5, caractérisé en ce que l'on met en oeuvre la séquence des trois étapes de procédé au moins à deux reprises successivement sur les mêmes fibres.

7. Procédé selon l'une des revendications 1 à 6, caractérisé en ce que l'on dissout des composés de magnésium, d'aluminium, d'yttrium et de métaux de terres rares, seuls ou en mélange, dans le polysilazane, fondu en tant que charge pour les fibres et on imprègne les fibres de cette solution au lieu de polysilazane pur.

8. Procédé selon la revendication 7, caractérisé en ce que l'on utilise en tant que charge les nitrates, les alcoolates, les acétates ou les acétylacétonates des métaux précités individuellement ou en mélange.

9. Procédé pour le revêtement d'un matériau composite à renfort en fibres caractérisé en ce que l'on traite par voie mécanique un matériau composite à renfort en fibres que l'on peut obtenir selon le procédé de la revendication 1, puis dans une première étape, on le revêt d'un polysilazane en fusion, dans une deuxième étape on transforme à l'aide de NH₃, de l'urotropine ou d'une amine le polysilazane en état infusible et dans une troisième étape on chauffe le matériau composite à renfort en fibres revêtu sous une atmosphère d'azote, de gaz nobles ou d'ammoniac à 800 à 2000 °C.
